# EUROPÄISCHE PATENTSCHRIFT

(11) **EP 0 507 114 B1**
(45) Veröffentlichungstag und Bekanntmachung des Hinweises auf die Patenterteilung: **22.05.1996**
(21) Anmeldenummer: 92104067.1
(22) Anmeldetag: 10.03.1992
(51) Int. Cl.: F16H 47/08, F16H 3/66

(54) **Planetengetriebeanordnung mit hydraulischem Drehmomentwandler**
Arrangement of a planetary gearing with a hydraulic torque converter
Arrangement d'un engrenage planetaire avec convertisseur de couple hydraulique

(30) Priorität: 30.03.1991 DE 4110537
(43) Veröffentlichungstag der Anmeldung: 07.10.1992
(73) Patentinhaber: Volkswagen Aktiengesellschaft, D-38436 Wolfsburg (DE)
(72) Erfinder: Prüss, Ludwig, Dipl.-Ing., W-3300 Braunschweig (DE)

(56) Entgegenhaltungen:
- EP-A- 0 041 730
- WO-A-87/00901
- DE-A- 2 743 581
- DE-A- 2 743 583
- DE-A- 2 745 623
- DE-C- 3 120 675
- PATENT ABSTRACTS OF JAPAN, unexamined applications, M Sektion, Band 13, Nr. 76, 21. Februar 1989 THE PATENT OFFICE JAPANESE GOVERNMENT Seite 144 M 800
- Revue Technique Automobile, 09/1971, Seiten 83-97: "Les transmissions automatiques: la transmission General-Motors 3-OVH"

## Beschreibung

Die Erfindung betrifft eine Planetengetriebeanordnung mit hydraulischem Drehmomentwandler gemäß dem Oberbegriff des Patentanspruchs 1.

Aus der Automobiltechnischen Zeitschrift, ATZ 92 (1990), Seite 458 bis 469 ist eine derartige Getriebeanordnung mit eine Ravineaux-Planetensatz, drei Kupplungen und zwei Bremsen zur Aktivierung der vier vorgesehenen Gangstufen bekannt. Zwei der Kupplungen verbinden einen Ausgang des hydraulischen Drehmomentwandlers mit einem kleinen oder einem großen Sonnenrad. Durch die dritte Kupplung ist der Eingang des hydraulischen Drehmomentwandlers mit einem Planetenträger verbindbar. Eine der Bremsen legt das große Sonnenrad und die andere den Planetenträger fest. Die drei Kupplungen sind in axialer Richtung im wesentllichen aufeinanderfolgend und mit gleichem radialen Abstand von der Getriebeeingangswelle angeordnet. Eine der beiden Bremsen dieses Getriebes ist im gleichen und dichten axialen Abstand vom motorseitigen Ende des Getriebes radial außerhalb einer Kupplung angeordnet, so daß die Turbinendrehzahl des Drehmomentwandlers, deren Kenntnis für die Steuerung eines komfortablen Schaltvorganges bei einem Automatikgetriebe von Bedeutung ist, nur unter großem technischen Aufwand meßbar ist.

Diese Schwierigkeit ergibt sich auch bei dem aus der DE 27 43 583 A1 bekannten Getriebe, bei dem ebenfalls in unmittelbarer Nähe zum Drehmomentwandler zwei Getriebekupplungen so radial übereinander angeordnet sind, daß die Turbinendrehzahl nicht oder nur mit sehr großem technischen Aufwand meßbar ist. Ein weiterer Nachteil dieses Getriebes ist, daß die Anordnung der dritten Getriebekupplung in unmittelbarer Nähe zum hydraulischen Wandler den Einbau einer Wandlerüberbrückungskupplung nicht ermöglicht.

Die Aufgabe der vorliegenden Erfindung ist es, ein kurzbauendes Planetengetriebe der genannten Art vorzustellen, bei dem die Turbinendrehzahl des Drehmomentwandlers mit Hilfe eines im Vergleich zu den bekannten Getrieben leicht einbaubaren Meßmittels erfaßbar ist. Außerdem soll durch die gewählte Anordnung gewährleistet sein, daß die Getriebekupplungen und die Getriebebremsen bauraumsparend betätigbar sind.

Erfindungsgemäß wird diese Aufgabe durch eine gattungsemäße Getriebeanordnung mit den kennzeichnenden Merkmale des Patentanspruchs 1 gelöst. Danach sind die Bremsen und die ersten beiden Kupplungen des Getriebes radial außerhalb der dritten Kupplung angeordnet. Außerdem ist die dritte Kupplung zur Verbindung des Eingangs des hydraulischen Drehmomentwandlers mit dem Planetenträger axial zwischen den ersten beiden Kupplungen einerseits und den Bremsen andererseits positioniert. Eine Getriebestruktur mit den Merkmalen des Hauptanspruchs erlaubt die Zusammenfassung der ersten beiden Kupplungen derart, daß in der Nähe des Drehmomentwandlers problemlos ein Meßmittel zur Erfassung der Turbinendrehzahl des Wandlers plazierbar ist. Außerdem erlaubt der gewählte Getriebeaufbau mit den radial außerhalb einer dritten Kupplung angeordneten und zu zwei Baugruppen zusammengefaßten Kupplungen und Bremsen, die dritte Kupplung zwischen diesen Baugruppen einzuschließen, was eine besonders kompakte Bauform des Getriebes ergibt.

Eine vorteilhafte Ausgestaltung der Erfindung sieht vor, daß die ersten beiden Kupplungen in axialer Richtung etwa auf gleicher Höhe angeordnet sind, wobei die erste Kupplung für das große Sonnenrad radial außerhalb der zweiten Kupplung positioniert ist. Dabei kann es besonders vorteilhaft sein, daß die ersten beiden Kupplungen axial nebeneinander angeordnet sind.

In einer weiteren Ausgestaltung der Erfindung kann vorgesehen sein, daß die Bremsen und/oder die ersten beiden Kupplungen durch je eine in zwei Richtungen beaufschlagbare Kolben-Zylinder-Einheiten betätigbar sind.

Außerdem kann vorgesehen sein, daß axial neben den Bremsen ein Freilauf für das durch eine der beiden Bremsen betätigbare Getriebeelement, insbesondere für den Planetenträger angeordnet ist. Außerdem kann vorgesehen sein, daß der hydraulische Drehmomentwandler über eine Überbrückungskupplung verfügt. Schließlich kann, wie schon erwähnt, im Bereich zwischen dem hydraulischen Drehmomentwandler und den ersten beiden Kupplungen ein Meßmittel zur Ermittlung der Drehzahl der Turbine des hydraulischen Drehmomentwandlers angeordnet sein.

Ausführungsformen der Erfindung werden im folgenden anhand der Zeichnungen erläutert. Es zeigen:
- Figur 1: eine erfindungsgemäße Planetengetriebeanordnung mit hydraulischem Drehmomentwandler;
- Figur 2: die Planetengetriebeanordnung gemäß Figur 1, jedoch mit einer Überbrückungskupplung für den Wandler;
- Figur 3: die Planetengetriebeanordnung gemäß Figur 2, jedoch mit einer speziellen Anordnung der Kupplungen K1 und K2.

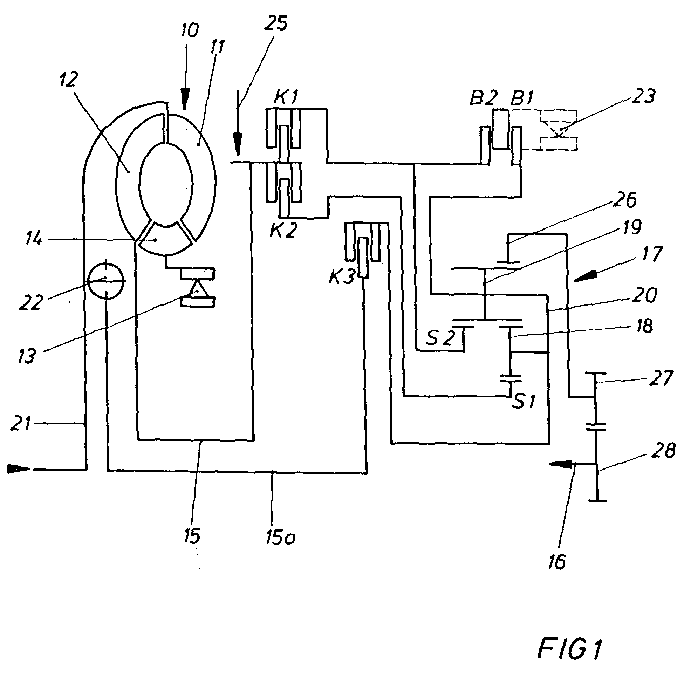

Eine erfindungsgemäße Planetengetriebeanordnung weist gemäß Figur 1 einen hydraulischen Drehmomentwandler 10 in schematischer Darstellung auf. Die Ziffern 11 und 12 bezeichnen eine Pumpe und eine Turbine des Wandlers 10. Weiterhin ist in diesem Bereich ein über einen Freilauf 13 abgestütztes Leitrad 14 angeordnet.

Die Turbine 12 ist über einen Getriebezweig 15 wahlweise mit einer der Kupplungen K1 oder K2 verbindbar. Letztere sind in axialer Richtung - Pfeil 16 - auf gleicher Höhe angeordnet, mit der Kupplung K1 radial außerhalb der Kupplung K2. Die Kupplung K1 verbindet die Turbine 12 mit einem großen Sonnenrad S2 eines Ravigneaux-Planetensatzes 17. Die Kupplung K2 verbindet entsprechend die Turbine 12 mit einem kleinen Sonnenrad S1, welches ein inneres Planetenrad 18 treibt, das zusammen mit dem großen Sonnenrad S2 auf einem äußeren Planetenrad 19 abwälzt. Beide Planetenräder 18, 19 sitzen auf demselben Planetenträger 20.

Eine weitere Kupplung K3 ist im Bereich zwischen den beiden Kupplungen K1, K2 und dem Planetensatz 17 vorgesehen. Diese verbindet den Eingang 21 des hydraulischen Drehmomentwandlers 10 über einen Drehschwingungsdämpfer 22 mit dem zuvor genannten Planetenträger 10 und ist im wesentlichen radial innerhalb der Kupplungen K1, K2 angeordnet.

Der Aufbau des Planetensatzes 17 entspricht im wesentlichen dem in der eingangs genannten ATZ 92 (1990) 458-469 Beschriebenen. Dementsprechend ist ein Ringrad 26 über ein Ritzel 27 mit einem Getriebeausgang 28 verbunden.

Im radial äußeren Bereich und zugleich axial benachbart sind Bremsen B1, B2 angeordnet. Erstere wirkt auf den Planetenträger 20, während letztere, ebenso wie die Kupplung K1, auf das große Sonnenrad S2 wirkt.

Die beschriebene Anordnung ist eine besonders kurzbauende Variante eines 4-Gang-Automatikgetriebes in Planetenbauweise. Eine Funktionsergänzung ist möglich durch eine Kopplung der Bremse B1 mit einem Freilauf 23. Dieser ist in den Figuren 1 bis 3 nur gestrichelt gezeichnet und wird bezüglich seiner Funktion in Verbindung mit dem 1. Gang weiter unten näher erläutert. Zur Darstellung der einzelnen Gänge werden die Getriebeglieder (Bremsen, Kupplungen, Freilauf) wie folgt aktiviert:

| | |
|---|---|
| Rückwärtsgang : | B1, K1 |
| 1. Gang hydraulisch (manuell) : | B1, K2 |
| 1. Gang hydraulisch : | K2, Freilauf 23 |
| 2. Gang hydraulisch : | B2, K2 |
| 3. Gang hydraulisch : | K1, K2 |
| 3. Gang mechanisch : | K1, K2, K3 |
| 4. Gang mechanisch : | B2, K3 |

Die Unterscheidung zwischen "1. Gang hydraulisch (manuell)" und "1. Gang hydraulisch" ergibt sich durch eine entsprechend mögliche Anwahl durch den Fahrer. Um die Bremswirkung des Motors nutzen zu können, ist auch bei Automatikgetrieben üblicherweise der 1. Gang fest einlegbar. Für diesen speziellen Fall ist eine Schaltung nur mit dem Freilauf 23 und ohne Bremse B1 nicht zweckmäßig. Der Einsatz des Freilaufs 23 ist vielmehr dann sinnvoll, wenn es auf die Bremswirkung im 1. Gang nicht ankommt, d. h. bei normalem Fahrbetrieb unter Nutzung aller Vorwärtsgänge durch die Automatik.

In einer Ausführungsform ohne den Freilauf 23 verbleibt für den 1. Gang die Betätigung durch B1 und K2, sowohl für eine eventuelle manuelle Anwahl durch den Fahrer, als auch bei normalem Automatikbetrieb.

Die Kupplung K3 bewirkt eine direkte Verbindung zwischen dem Eingang 21 des hydraulischen Drehmomentwandlers 10 mit dem Planetenträger 20. Dadurch wird die Wandlerfunktion im "3. Gang mechanisch" im Gegensatz zum "3. Gang hydraulisch" ausgeschaltet. Der 4. Gang ist ausschließlich in Verbindung mit der Kupplung K3 realisiert. Deswegen ist an dieser Stelle keine weitere Unterscheidung erforderlich.

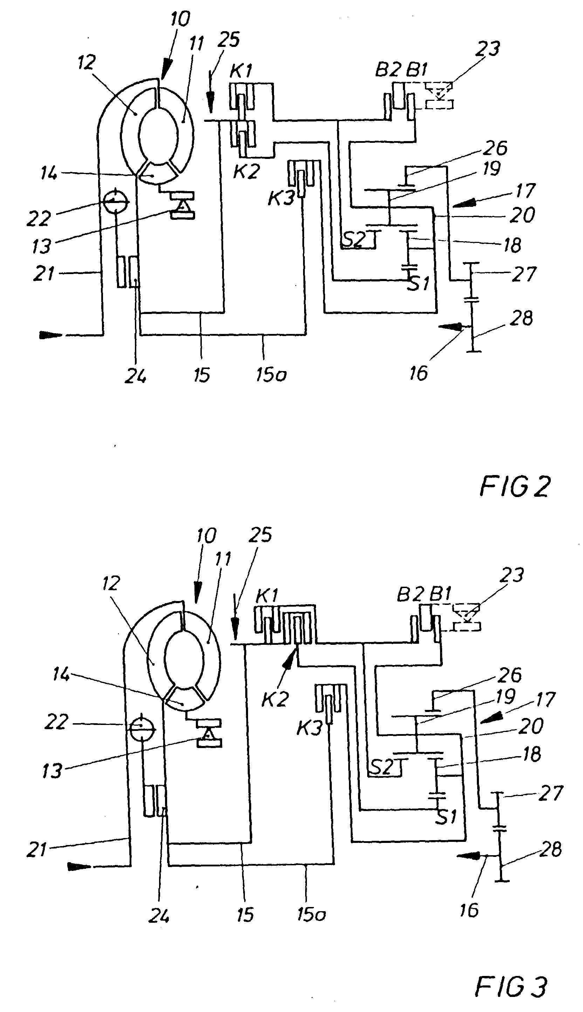

Figur 2 zeigt eine Funktionserweiterung der erfindungsgemäßen Anordnung mit einer Überbrückungskupplung 24 für den hydraulischen Drehmomentwandler 10. Auch in dieser Ausführung ist ein Betrieb mit und ohne Freilauf 23 möglich. Der zur Kupplung K3 führende Getriebezweig 15a ist mit dem Zweig 15 verbunden. Da die Überbrückungskupplung 24 jeden der Gänge überbrücken kann, wird zwischen "3. Gang mechanisch" und "3. Gang hydraulisch" nicht unterschieden. Vielmehr erfolgt die Betätigung des 3. Ganges nur noch über die Kupplungen K2 und K3, vgl. folgendes Schaltschema:

| | |
|---|---|
| Rückwärtsgang : | B1, K1 |
| 1. Gang hydraulisch (manuell) : | B1, K2 |
| 1. Gang hydraulisch : | K2, Freilauf 23 |
| 2. Gang hydraulisch : | B2, K2 |
| 3. Gang hydraulisch : | K2, K3 |
| 4. Gang hydraulisch : | B2, K3 |

Der besondere Vorteil dieser Schaltung und damit auch der speziellen Anordnung liegt in der Betätigung der Kupplungen K1, K2. Für keinen Gang ist die Aktivierung beider Kupplungen K1, K2 zugleich erforderlich. Die entsprechend erforderlichen, in den Figuren nicht gezeigten Betätigungselemente für die Schaltglieder können so einfacher und raumsparender aufgebaut sein. Besonders deutlich wird dies in der Anordnung nach Figur 3. Dort sind die Kupplungen K1, K2 radial außerhalb der Kupplung K3 und axial nebeneinander angeordnet. Durch letzteres bedingt sind die Kupplungen K1 und K2 durch eine gemeinsame raumsparende Doppelkolbeneinheit betätigbar.

Bei Verwendung der Überbrückungskupplung 24 ohne den Freilauf 23 wird der 1. Gang entsprechend "1. Gang hydraulisch (manuell)" betätigt.

Die durch die besondere Getriebekonzeption bedingte Bauraumverkürzung bietet zwei weitere, bisher nicht angesprochene Vorteile. In der Ausführungsform ohne den Freilauf 23 ist eine stärkere Dimensionierung der Bremsen B1, B2 möglich, ohne daß hierfür wiederum eine Bauraumverlängerung erforderlich wäre.

Die Bremsen B1 und B2 sind zudem durch eine nicht gezeigte gemeinsame, beispielsweise in zwei Richtungen beaufschlagbare Kolben-Zylinder-Einheit betätigbar.

Die platzsparende, besondere Anordnung der Kupplungen K1, K2 ermöglicht eine einfache Erfassung der Turbinendrehzahl, beispielsweise durch induktiv arbeitende Sensoren am nicht gezeigten Getriebegehäuse. In der Figur ist ein entsprechender Meßpunkt am Zweig 15 neben den Kupplungen K1, K2 mit einem Pfeil 25 bezeichnet.

### BEZUGSZEICHENLISTE

- 10: Hydraulischer Drehmomentwandler
- 11: Pumpe
- 12: Turbine
- 13: Freilauf
- 14: Leitrad
- 15: Zweig
- 15a: Zweig
- 16: Pfeil
- 17: Planetensatz
- 18: Planetenrad
- 19: Planetenrad
- 20: Planetenträger
- 21: Eingang
- 22: Drehschwingungsdämpfer
- 23: Freilauf
- 24: Überbrückungskupplung
- 25: Pfeil
- 26: Ringrad
- 27: Ritzel
- 28: Getriebeausgang
- K1: Kupplung
- K2: Kupplung
- K3: Kupplung
- B1: Bremse
- B2: Bremse
- S1: Sonnenrad
- S2: Sonnenrad

## Patentansprüche

1. Planetengetriebeanordnung mit hydraulischem Drehmomentwandler,
mindestens einem Ravigneaux-Planetensatz und mindestens drei Kupplungen (K1, K2, K3) und zwei Bremsen (B1, B2) zur Aktivierung der einzelnen, mindestens vier Gangstufen,
wobei durch die ersten beiden Kupplungen (K1, K2) ein Ausgang des hydraulischen Drehmomentwandlers (10) wahlweise mit einem kleinen Sonnenrad (S1) oder mit einem großen Sonnenrad (S2) und durch die dritte Kupplung (K3) der Eingang des hydraulischen Drehmomentwandlers (10) mit einem Planetenträger (20) verbindbar ist,
wobei durch die erste Bremse (B1) der Planetenträger (20)
und durch die zweite Bremse (B2) das große Sonnenrad (S2) festlegbar sind,
und bei der die Bremsen (B1, B2) einerseits und die ersten beiden Kupplungen (K1, K2) andererseits unmittelbar benachbart angeordnet sind,
dadurch gekennzeichnet,
daß die Bremsen (B1, B2) und die ersten beiden Kupplungen (K1, K2) radial außerhalb der dritten Kupplung (K3) angeordnet sind,
und daß die dritte Kupplung (K3) zur Verbindung des Eingangs (21) des hydraulischen Drehmomentwandlers (10) mit dem Planetenträger (20) axial zwischen den ersten beiden Kupplungen (K1, K2) einerseits und den Bremsen (B1, B2) andererseits angeordnet ist.

2. Planetengetriebeanordnung nach Anspruch 1, dadurch gekennzeichnet, daß die ersten beiden Kupplungen (K1, K2) in axialer Richtung etwa auf gleicher Höhe angeordnet sind, mit der ersten Kupplung (K1) für das große Sonnenrad (S2) radial außerhalb der zweiten Kupplung (K2).

3. Planetengetriebeanordnung nach Anspruch 1, dadurch gekennzeichnet, daß die ersten beiden Kupplungen (K1, K2) axial nebeneinander angeordnet sind.

4. Planetengetriebeanordnung nach einem der Ansprüche 1 bis 3, dadurch gekennzeichnet, daß die Bremsen (B1, B2) und/oder die ersten beiden Kupplungen (K1, K2) durch eine in zwei Richtungen beaufschlagbare Kolben-Zylinder-Einheit betätigbar sind.

5. Planetengetriebeanordnung nach einem der Ansprüche 1 bis 4, dadurch gekennzeichnet, daß axial neben den Bremsen (B1, B2) ein Freilauf (23) für das durch die Bremse (B1) betätigbare Getriebeelement, insbesondere für den Planetenträger (20) angeordnet ist.

6. Planetengetriebeanordnung nach einem der Ansprüche 1 bis 5, dadurch gekennzeichnet, daß im Bereich zwischen dem hydraulischen Drehmomentwandler (10) und den ersten beiden Kupplungen (K1, K2) Mittel zur Messung der Drehzahl der Turbine des hydraulischen Drehmomentwandlers (10) angeordnet sind.

7. Planetengetriebeanordnung nach einem der Ansprüche 1 bis 6, dadurch gekennzeichnet, daß der hydraulische Drehmomentwandler (10) eine Überbrückungskupplung (24) aufweist.

## Claims

1. Planetary gear arrangement comprising a hydraulic torque converter, at least one Ravigneaux-type planetary gear and at least three couplings (K1, K2, K3) and two brakes (B1, B2) for the purpose of activating the individual at least four gear steps, wherein by virtue of the first two couplings (K1, K2) an output of the hydraulic torque converter (10) can be connected as desired to a small sun wheel (S1) and to a large sun wheel (S2) and by virtue of the third coupling (K3) the input of the hydraulic torque converter (10) can be connected to a planetary carrier (20), wherein it is possible to hold in position the planetary carrier (20) by virtue of the first brake (B1) and the large sun wheel (S2) by virtue of the second brake (B2), and wherein the brakes (B1, B2) on the one side and the first two couplings (K1, K2) on the other side are disposed directly adjacent, characterised in that the brakes (B1, B2) and the first two couplings (K1, K2) are disposed radially outside the third coupling (K3), and that the third coupling (K3) for the purpose of connecting the input (21) of the hydraulic torque converter (10) to the planetary carrier (20) is disposed axially between the first two couplings (K1, K2) on the one side and the brakes (B1, B2) on the other side.

2. Planetary gear arrangement according to claim 1, characterised in that the first two couplings (K1, K2) are disposed in the axial direction at the same level, with the first coupling (K1) for the large sun wheel (S2) radially outside the second coupling (K2).

3. Planetary gear arrangement according to claim 1, characterised in that the first two couplings (K1, K2) are disposed axially adjacent to each other.

4. Planetary gear arrangement according to any one of claims 1 to 3, characterised in that the brakes (B1, B2) and/or the first two couplings (K1, K2) can be actuated by virtue of a piston-cylinder unit which is actuatable in two directions.

5. Planetary gear arrangement according to any one of claims 1 to 4, characterised in that a free-wheel (23) is disposed axially adjacent to the brakes (B1, B2) for the gear element, which is actuated by the brake (B1), in particular for the planetary carrier (20).

6. Planetary gear arrangement according to any one of claims 1 to 5, characterised in that means for measuring the rotational speed of the turbine of the hydraulic torque converter (10) are disposed in the region between the hydraulic torque converter (10) and the first two couplings (K1, K2).

7. Planetary gear arrangement according to any one of claims 1 to 6, characterised in that the hydraulic torque converter (10) comprises a bridging coupling (24).

## Revendications

1. Disposition de boîte de vitesses à engrenages planétaires, avec un convertisseur hydraulique de couple de rotation, avec au moins un engrenage planétaire Ravigneaux et au moins trois embrayages (K1, K2, K3) et deux freins (B1, B2) pour mettre en action les différentes vitesses, au nombre d'au moins quatre, disposition dans laquelle on peut relier par les deux premiers embrayages (K1, K2) une sortie du convertisseur hydraulique de couple de rotation (10) à volonté à une petite roue solaire (S1) ou à une grande roue solaire (S2) et par le troisième embrayage (K3), l'entrée du convertisseur hydraulique de couple de rotation (10) à une cage de transmission planétaire (20), la cage de transmission planétaire (20) pouvant être immobilisée par le premier frein (B1) et la grande roue soleil (S2) pouvant être immobilisée par le second frein (B2), et dans le cas de laquelle les freins (B1, B2) d'une part, et les deux premiers embrayages (K1, K2) d'autre part, sont disposés directement côte à côte, disposition de boîte de vitesses à engrenages planétaires caractérisée en ce que les freins (B1, B2) et les deux premiers embrayages (K1, K2) sont disposés radialement en dehors du troisième embrayage (K3), et en ce que le troisième enmbrayage (K3) est disposé de façon à relier l'entrée (21) du convertisseur hydraulique de couple de rotation (10) à la cage de transmission planétaire (20) axialement entre les deux premiers embrayages (K1, K2), d'une part et les freins (B1, B2) d'autre part.

2. Disposition de boîte de vitesses à engrenages planétaires selon la revendication 1, caractérisée en ce que les deux premiers embrayages (K1, K2) sont disposés dans le sens axial à peu près à la même hauteur, avec le premier embrayage (K1) pour la grande roue solaire (S2) placé radialement en dehors du second embrayage (K2).

3. Disposition de boîte de vitesses à engrenages planétaires selon la revendication 1, caractérisée en ce que les deux premiers embrayages (K1, K2) sont disposés axialement côte à côte.

4. Disposition de boîte de vitesses à engrenages planétaires selon l'une des revendication 1 à 3, caractérisée en ce que les deux freins (B1, B2) et/ou les deux premiers embrayages (K1, K2) peuvent être actionnés par un ensemble piston-cylindre pouvant être sollicité dans deux directions.

5. Disposition de boîte de vitesses à engrenages planétaires selon l'une des revendication 1 à 4, caractérisée en ce qu'axialement on dispose à côté des freins (B1, B2) une roue libre (23) pour l'élément de la boîte de vitesses qui peut être actionné par le frein (B1), en particulier pour la cage de transmission planétaire (20).

6. Disposition de boîte de vitesses à engrenages planétaires selon l'une des revendication 1 à 5, caractérisée en ce que dans la zone comprise entre le convertiseur hydraulique de couple de rotation (10) et les deux premiers embrayages (K1, K2) on dispose un moyen servant à mesurer la vitesse de rotation de la turbine du convertisseur hydraulique de couple de rotation (10).

7. Disposition de boîte de vitesses à engrenages planétaires selon l'une des revendication 1 à 6, caractérisée en ce que le convertisseur hydraulique de couple de rotation (10) présente un embrayage de pontage (24).
